(19) Europäisches Patentamt
European Patent Office
Office européen des brevets

(11) EP 3 910 847 A1

(12) EUROPEAN PATENT APPLICATION

(43) Date of publication:
17.11.2021 Bulletin 2021/46

(51) Int Cl.:
*H04L 5/00* (2006.01)

(21) Application number: 20305498.6

(22) Date of filing: 14.05.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: GUANGDONG OPPO MOBILE
TELECOMMUNICATIONS
CORP., LTD.
Wusha, Chang'an
Dongguan,
Guangdong 523860 (CN)

(72) Inventor: LIN, Hao
92200 Neuilly-sur-Seine (FR)

(74) Representative: Ipside
7-9 Allées Haussmann
33300 Bordeaux Cedex (FR)

(54) **A METHOD OF SSB DESIGN**

(57) An apparatus and a method of wireless communication of the same are provided. The present disclosure describes a method of wireless communication for decoupling the DMRS and PBCH in the SSB, and further provide a dedicated PAPR reduction technique that can be applied on DMRS and/or PBCH, respectively. A method to apply a dedicated PAPR reduction technique on part of a symbol of BBS is also provided.

Fig. 7

**Description**

**Technical field of the invention**

The present disclosure relates generally to wireless communication, more specifically to techniques for synchronization signal blocks.

**Background**

In New Radio (NR) Rel.15 the downlink is using OFDM waveform for several advantages. In the first, the OFDM waveform can have high flexibility for multiplexing multiple data streams in the frequency domain. Moreover, each multiplexed data stream is independently modulated and orthogonal to the others. In the second, the subcarrier spacing is much narrower than the bandwidth of the channel, so that the transmitted data stream is not severely impacted by the channel delay spread. It means that for the data stream transmitted over a subcarrier, a quasi-flat fading can be assumed. This leads to a much simpler receiver design resulting in a low complexity transceiver processing.

In order to connect to a network, a device needs to acquire network synchronization and obtain essential information for the initial access. Synchronization signals are used for adjusting the frequency of the device relative to the network, and for finding the proper timing of the received from the network. Synchronization signals are transmitted in synchronization signal and PBCH blocks (SS/PBCH blocks, sometimes referred to as SS blocks or SSB). The terms "SS/PBCH blocks", "SS blocks" or "SSB" are used interchangeably in this disclosure.

In the New Radio (NR), a procedure for synchronization and access may involve several signals as follows: primary synchronization signal (PSS), secondary synchronization signal (SSS), physical broadcast synchronization (PBCH), furthermore, demodulation reference signals (DMRS) are interleaved with PBCH resources in order to receive.

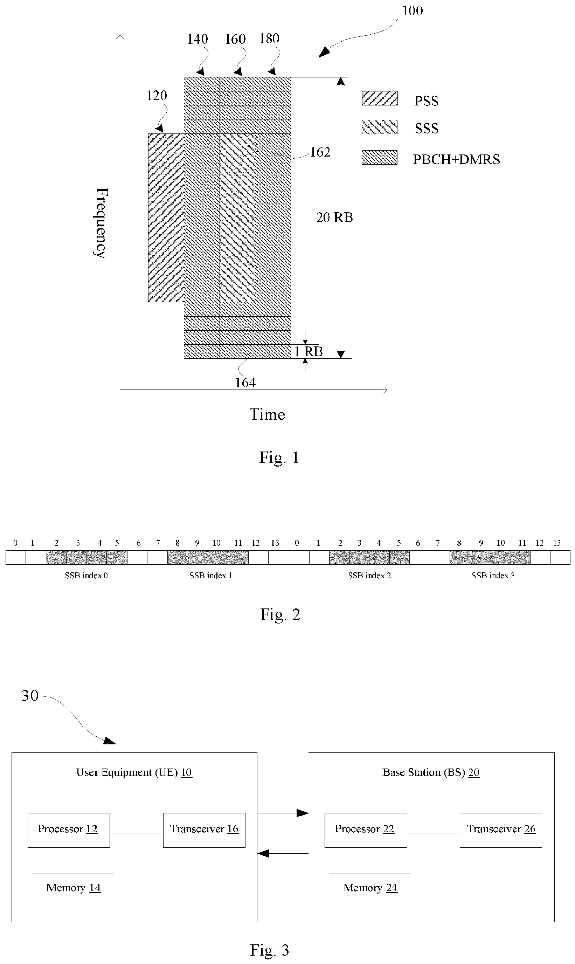

In NR Rel.15 the SS/PBCH block (SSB) 100 contains four OFDM symbols, as shown in Fig. 1.

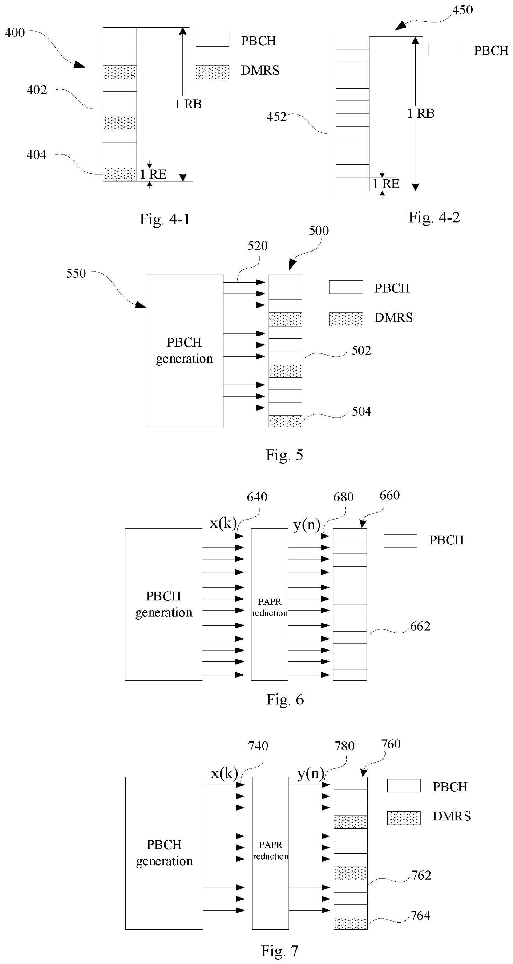

The first symbol 120 is the primary synchronization signal (PSS) and it has 12 resource blocks (RB) in frequency domain. The second 140 and the fourth 180 symbols are PBCH symbols; while the third symbol 160 contains both the secondary synchronization signal (SSS) 162 and PBCH 164. For the PBCH comprising resource blocks (RB), each RB contains data and demodulation reference signal (DMRS) and the DMRS pattern is shown in Figure 4-1. For every four resource elements (RE) there is a DMRS. There are in total 48 RBs used for PBCH and it is equivalent to 48*12=576 RE, in which 1/4 of the RE are used for DMRS, therefore the actual number of RE used for PBCH is 432 RE. It is to note that 1 RE is also known as 1 subcarrier.

The PSS is a sequence and it is selected from three candidate sequences. The PSS has a sequence ID, the sequence ID is from {0, 1, 2}. The SSS is a sequence selected from 336 sequences and the SSS also has a sequence ID ranging from {0, 1, 2, ...,355}. The PSS sequence and the SSS sequence ID are used to represent the serving cell ID, by

$$N_{ID}^{CELL} = N_{ID}^{PSS} + 3 * N_{ID}^{SSS}$$

In the time domain, the SSBs are transmitted in an SSB burst which contains multiple SSBs with SSB indices. The number of the SSBs in an SSB burst depends on the numerology, e.g. subcarrier spacing. When a UE performs downlink (DL) synchronization based on SSBs, the UE will acquire the SSB index by DRMS sequences, as shown in Fig. 2. As presented above, each SSB contains PBCH and further contains PBCH-DMRS. Different DMRS sequences correspond to different SSB index.

In Rel. 15, the considered carrier frequency ranges are 410 MHz - 7125 MHz and 24250 MHz - 52600 MHz, below 52.6 GHz. Nevertheless, when looking towards further boosted data throughput, higher carrier frequency beyond 52.6 GHz needs to be considered due to the wider available carrier bandwidth. However, when operating in a high carrier frequency, the OFDM waveform may face high PAPR issue.

Therefore, there is a need for an apparatus and a method of wireless communication of the same, which can solve issues in the prior art, provide a method of decoupling the DMRS and PBCH in the SSB, and further provide a dedicated PAPR reduction technique that can be applied on DMRS and/or PBCH, respectively. Another need for an apparatus and a method of wireless communication of the same is to provide a method to apply a dedicated PAPR reduction technique on part of a symbol of SSB.

**Summary of the invention**

An object of the present disclosure is to provide an apparatus and a method of wireless communication of the same, which can solve issues in the prior art, provide a method of decoupling the DMRS and PBCH in the SSB, and further provide a dedicated PAPR reduction technique that can be applied on DMRS and/or PBCH, respectively. Another object of the present disclosure is to provide an apparatus and a method of wireless communication of the same, which can solve issues in the prior art, provide a method to apply a dedicated PAPR reduction technique on part of a symbol of BBS.

According to a first aspect of the disclosure, provided is a method for wireless communication at a base station (BS). The method comprises transmitting, by the BS, a first information, wherein the first information comprises a physical broadcast channel (PBCH) and at least one of the following: a secondary synchronization signal (SSS), a demodulation reference signal (DMRS); and wherein the first information is used for synchronization.

According to a second aspect of the disclosure, provided is a BS includes a memory, a transceiver, and a processor coupled to the memory and the transceiver. The processor is configured to control the transceiver to transmit a first information, wherein the first information comprises a physical broadcast channel (PBCH) and at least one of the following: a secondary synchronization signal (SSS), a demodulation reference signal (DMRS); and wherein the first information is used for synchronization.

According to a third aspect of the disclosure, provided is a method for wireless communication at a user equipment (UE). The method comprises receiving, by the UE, a first information, wherein the first information comprises a physical broadcast channel (PBCH) and at least one of the following: a secondary synchronization signal (SSS), a demodulation reference signal (DMRS); and wherein the first information is used for synchronization.

According to a fourth aspect of the disclosure, provided is a UE includes a memory, a transceiver, and a processor coupled to the memory and the transceiver. The processor is configured to control the transceiver to receive a first information, wherein the first information comprises a physical broadcast channel (PBCH) and at least one of the following: a secondary synchronization signal (SSS), a demodulation reference signal (DMRS); and wherein the first information is used for synchronization.

According to a fifth aspect of the disclosure, provided is a non-transitory computer-readable storage medium has stored thereon instructions that, when executed by a computer, cause the computer to perform the above method.

According to a sixth aspect of the disclosure, provided is a chip includes a processor, configured to call and run a computer program stored in a memory, to cause a device in which the chip is installed to execute the above method.

According to a seventh aspect of the disclosure, provided is a computer readable storage medium, in which a computer program is stored, causes a computer to execute the above method.

According to an eighth aspect of the disclosure, provided is a computer program product includes a computer program, and the computer program causes a computer to execute the above method.

According to a ninth aspect of the disclosure, provided is a computer program causes a computer to execute the above method.


**Brief description of the drawings**

The invention may be better understood by referring to the following description and accompanying drawings that illustrate embodiments of the invention. Among the drawings:

Figure 1 illustrates an example of SS/PBCH block (SSB) structure;
Figure 2 is an illustration of SSB index;
Figure 3 illustrates a block diagram of a user equipment (UE) and a base station (BS) (e.g., gNB) of communication in a communication network system in accordance with certain aspects of the present disclosure;
Figure 4-1 illustrates an example of resource block (RB) of a PBCH symbol of SSB;
Figure 4-2 illustrates a resource block (RB) of a PBCH symbol of SSB, wherein all resource elements (RE) of the RB are allocated to PBCH, in accordance with certain aspects of the present disclosure;
Figure 5 illustrates an example of mapping PBCH to subcarriers in accordance with prior art;
Figure 6 illustrates an example of a method of applying a PAPR reduction operation to PBCH in accordance with certain aspects of the present disclosure;
Figure 7 illustrates an example of a method of applying a PAPR reduction operation to PBCH in accordance with certain aspects of the present disclosure;
Figure 8 illustrates an example of an SSB configuration in accordance with aspects of the present disclosure;
Figure 9 illustrates an example of an SSB configuration in accordance with aspects of the present disclosure;
Figure 10 illustrates an example of an SSB configuration in accordance with aspects of the present disclosure;
Figure 11 illustrates an example of an SSB configuration in accordance with aspects of the present disclosure;
Figure 12 illustrates an example of an SSB configuration in accordance with aspects of the present disclosure;
Figure 13 illustrates an example of an SSB configuration in accordance with aspects of the present disclosure;
Figure 14 illustrates an example of an SSB configuration in accordance with aspects of the present disclosure.
Figure 15 illustrates an example of an SSB configuration in accordance with certain aspects of the present disclosure.

**Detailed description of embodiments**

Embodiments of the present disclosure are described in detail with the technical matters, structural features, achieved objects, and effects with reference to the accompanying drawings. Specifically, the terminologies in the embodiments of the present disclosure are merely for describing the purpose of the certain embodiment, but not to limit the disclosure.

The expression of the singular number in the present disclosure includes the meaning of the plural number unless the meaning of the singular number is definitely different from that of the plural number in the context. In the following description, the term "include" or "have" may represent the existence of a feature, a number, a step, an operation, a component, a part or the combination thereof described in the present disclosure, and may not exclude the existence or addition of another feature, another number, another step, another operation, another component, another part or the combination thereof.

The terms "first", "second" or "third" are used for the purpose of explanation about various components, and the components are not limited to the terms "first" and "second". The terms "first" and "second" are only used to distinguish one component from another component. For example, a first component may be named as a second component without deviating from the scope of the present disclosure.

As used herein, "base station" generally refers to a fixed or mobile base station that communicates with a wireless device and may be denoted by other terms such as eNB (evolved-NodeB), gNB (next generation NodeB), BTS (base transceiver system), space-borne or airborne platform (satellite or airplane), or access point.

As used herein, "user equipment (UE)" may be stationary or mobile, and may be denoted by other terms such as device, wireless device, terminal, MS (mobile station), UT (user terminal), SS (subscriber station), MT (mobile terminal) and etc.

FIG. 3 illustrates that, in some embodiments, a user equipment (UE) 10 and a base station (BS) (e.g., gNB) 20 of communication in a communication network system 30 according to an embodiment of the present disclosure are provided. The communication network system 30 includes one or more UEs 10 of a cell and the BS 20. The UE 10 may include a memory 14, a transceiver 16, and a processor 12 coupled to the memory 14, the transceiver 16. The base station 20 may include a memory 24, a transceiver 26, and a processor 22 coupled to the memory 24, the transceiver 26. The processor 12 or 22 may be configured to implement proposed functions, procedures and/or methods described in this description. Layers of radio interface protocol may be implemented in the processor 12 or 22. The memory 14 or 24 is operatively coupled with the processor 12 or 22 and stores a variety of first information to operate the processor 12 or 22. The transceiver 16 or 26 is operatively coupled with the processor 12 or 22, and the transceiver 16 or 26 transmits and/or receives a radio signal.

The processor 12 or 22 may include application-specific integrated circuit (ASIC), other chipset, logic circuit and/or data processing device. The memory 14 or 24 may include read-only memory (ROM), random access memory (RAM), flash memory, memory card, storage medium and/or other storage device. The transceiver 16 or 26 may include baseband circuitry to process radio frequency signals. When the embodiments are implemented in software, the techniques described herein can be implemented with modules (e.g., procedures, functions, and so on) that perform the functions described herein. The modules can be stored in the memory 14 or 24 and executed by the processor 12 or 22. The memory 14 or 24 can be implemented within the processor 12 or 22 or external to the processor 12 or 22 in which case those can be communicatively coupled to the processor 12 or 22 via various means as is known in the art.

In certain aspects, the processor 12 is configured to control the transceiver 16 to receive a first information, wherein the first information comprises a physical broadcast channel (PBCH) and at least one of the following: a secondary synchronization signal (SSS), a demodulation reference signal (DMRS); and wherein the first information is used for synchronization.

In certain aspects, the processor 22 is configured to control the transceiver 26 to transmit a first information, wherein the first information comprises a physical broadcast channel (PBCH) and at least one of the following: a secondary synchronization signal (SSS), a demodulation reference signal (DMRS); and wherein the first information is used for synchronization.

In certain aspects, PBCH transmissions may be transmitted in a subset of SSB time resources (e.g., in one, two, or three symbols of an SSB), and synchronization signals (e.g., primary synchronization signal (PSS) and secondary synchronization signal (SSS)) may be transmitted in another subset of SSB time resources (e.g., in two symbols of an SSB). An SSB may have a combination of PSS, SSS, PBCH, and DMRS signals, or a subset of these. SSB may be transmitted in a group of one or more SSB, which may be referred to as an SSB burst set. A user equipment (UE) may determine frequency positions of one or more SSB and may receive, from a cell, at least one SSB among the plural SSBs. A UE may use an SSB burst set pattern, for example, to determine downlink timing synchronization or find time locations for system information block (SIB) resources, random access channel (RACH) resources, channel state information reference signal (CSI-RS) resources, etc. In certain aspects, locations or patterns of SSB within an SSB burst set may be identified for each radio frequency (RF) band, depending on SSB transmission numerology and data/control transmission numerology, or other configuration for slots or radio frame design, etc.

Figure 4-1 illustrates an example of resource block (RB) of a PBCH symbol of SSB.

As known in 3GPP release 15, a PBCH included in SSB is multiplexed with DMRS on a same symbol, namely a PBCH-DMRS symbol. As shown in Figure 4-1, the PBCH-DMRS symbol comprises resource blocks 400 which comprise resource elements 402, 404 (RE, i.e., subcarrier). The resource elements 402 and 404 are, respectively, allocated to PBCH or DMRS.

Figure 4-2 illustrates a resource block (RB) of a PBCH symbol of SSB, wherein all resource elements (RE) of the RB are allocated to PBCH, in accordance with certain aspects of the present disclosure.

In certain aspects, as shown in Figure 4-2, a PBCH included in SSB is decoupled with other reference signal (e.g., DMRS) on a same symbol, namely a PBCH symbol. As shown in Figure 4-2, the PBCH symbol comprises a plurality of resource blocks 450 which comprise a plurality of resource elements 452 (RE, i.e., subcarriers). In the illustrated example, each RB 450 comprises 12 RE 452. The resource elements 452 may be allocated to PBCH. Thus, the PBCH may be mapped to all subcarriers of one resource block. In certain aspects, the PBCH may be mapped to all the subcarriers of the resource blocks allocated to the PBCH on a PBCH symbol.

Figure 5 illustrates an example of mapping PBCH to subcarriers in accordance with prior art.

In 3GPP Release 15, the PBCH included in SSB is multiplexed with DMRS on a same symbol. The symbol comprises resource blocks which comprise resource elements (RE, i.e., subcarriers). The resource elements are allocated to PBCH or DMRS. As shown in Fig. 5, a network entity (not represented, e.g., a base station) generates 550 PBCH which is mapped 520 directly to the subcarriers 502 which are not used for DMRS. The subcarriers 504 used for DMRS represent a portion (e.g., 1/4) of all subcarriers.

Figure 6 illustrates an example of a method of applying a peak-to-average power ratio (PAPR) reduction operation to PBCH in accordance with certain aspects of the present disclosure.

In certain aspects, an SSB comprises at least one PBCH as described in Figure 4-2, where the PBCH included in the SSB is decoupled with other reference signal (e.g., DMRS) on a same symbol, namely a PBCH symbol (not represented) which comprises a plurality of resource blocks 660. In certain aspects, a PAPR reduction technique may be applied to the PBCH before being mapped to the subcarriers. As the resource elements 662 of the resource blocks 660 are allocated to PBCH, in certain aspects, a peak-to-average power ratio (PAPR) reduction technique may be applied 640 to the PBCH before being mapped 680 to the subcarriers 662 of the PBCH symbol. In certain aspects, the applied PAPR reduction technique may be known or unknown to those skilled in the art. In certain aspects, the PAPR reduction technique is Discrete Fourier Transform (DFT) spreading, e.g., the DFT spreading disclosed in the present disclosure.

In certain aspects, the DFT size L for the DTF spreading technique is defined as the number of the subcarriers that are used to transmit PBCH on a symbol, i.e., the number of the subcarriers to which the PBCH are mapped.

In certain aspects, a PBCH symbol contains N resource blocks, where no DMRS is multiplexed with the PBCH on the same symbol, thus the total number of the subcarriers on the symbol is 12*N, given that one resource block (RB) contains 12 subcarriers. Thus, the DFT size L for the DFT spreading technique for PAPR reduction applied on the PBCH symbol is 12*N. In certain aspects, one resource block (RB) may contain M subcarriers, wherein M is an integer other than 12.

In certain aspects, a PBCH symbol may contain a specific number of resource blocks to make the implementation of the DFT spreading technique easy. In certain aspects, the number N of resource blocks of a PBCH symbol is chosen to be an integer which can be expressed on $2^a * 3^b * 5^c$, where a, b, c are integers. For instance, N=13 is to avoid accordingly. The exemplary value of N is 5 (for $5 = 2^0 * 3^0 * 5^1$) or 10 (for $10 = 2^1 * 3^0 * 5^1$) or 20 (for $20 = 2^2 * 3^0 * 5^1$), leading to respectively, that L = 60, or 120 or 240.

In certain aspects, it is assumed that PBCH before DFT operation (e.g., DFT spreading) is x(k) for k=0,...,L-1, thus PBCH after DFT operation y(n) for n=0,...,L-1 is given by $y(n) = \frac{1}{\sqrt{L}} \sum_{k=0}^{L-1} x(k) e^{-\frac{j2\pi kn}{L}}$, where L is the DFT size.

In certain aspects, the PAPR reduction operation comprises a step of applying 640 a PAPR reduction technique on PBCH x(k). The PAPR reduction operation may further comprise a step of mapping 680 the obtained PBCH y(n) to subcarriers 662.

In a more generalized way, a PAPR reduction method, e.g. DFT spreading described in the present disclosure, may be applied on other signals contained in SSB, e.g. DMRS, PSS, SSS.

In certain aspects, a PAPR reduction method may be applied to a DMRS symbol contained in an SSB, where all subcarriers of the symbols are used for DMRS. The DFT spreading technique applies on a DMRS symbol in the same way as on a PBCH symbol as aforementioned, especially for choosing the DFT size L.

In certain aspects, a network entity (e.g., a base station) comprises means for generating PBCH (or DMRS, or PSS, or SSS) and for applying a PAPR reduction technique on PBCH (or DMRS, or PSS, or SSS) before that the generated PBCH (or DMRS, or PSS, or SSS) is mapped to subcarriers, wherein the PAPR reduction technique is applied in accordance with methods in the present disclosure.

Figure 7 illustrates an example of a method of applying a PAPR reduction operation to PBCH in accordance with certain aspects of the present disclosure.

In certain aspects, an SSB comprise at least one PBCH as described in Figure 4-1, where the PBCH included in the SSB is multiplexed with DMRS on a same symbol. In certain aspects, a PBCH reduction technique may be still applied to the PBCH before being mapped to the subcarriers. As the resource elements of the resource blocks are allocated to PBCH or DMRS, in certain aspects, a PBCH reduction technique may be applied only to the PBCH before being mapped to the subcarriers 762 not used for DMRS. In certain aspects, the applied PAPR reduction technique may be known or unknown to those skilled in the art. In certain aspect, the PAPR reduction technique is Discrete Fourier Transform (DFT) spreading, e.g., the DTF spreading disclosed in the present disclosure.

In certain aspects, the DFT size L for the DTF spreading technique is defined as the number of the subcarriers 762 that are used to transmit PBCH on a symbol, i.e., the number of the subcarriers on which the PBCH are mapped. As shown in Fig. 7, the number of subcarriers for PBCH is reduced compared with in Fig. 6, for one or more subcarriers of the symbol are allocated to DMRS. Similarly, the DFT size L for the DFT spreading technique for PAPR reduction applied on the PBCH symbol is also reduced and should still be equal to the total number of the subcarriers that are used for PBCH mapping. In the example shown in Fig.7, the DFT size L becomes (12-3)*N=9*N, where N is number of resource blocks in the corresponding PBCH-DMRS symbol, each resource block contains 12 subcarriers 762, 764, and 9 of these subcarriers are used for PBCH mapping. In certain aspects, one resource block (RB) may contain M subcarriers, wherein M is an integer other than 12.

In certain aspects, the PAPR reduction operation comprises a step of applying 740 a PAPR reduction technique on PBCH x(k). The PAPR reduction operation may further comprise a step of mapping 780 the obtained PBCH y(n) to subcarriers 762.

In a more generalized way, a PAPR reduction method, e.g. DFT spreading described in the present disclosure, may be applied on other signals contained in SSB, e.g. DMRS, PSS, SSS.

In certain aspects, a PAPR reduction method may be applied to a DMRS symbol contained in an SSB, where all subcarriers of the symbols are used for DMRS. The DFT spreading technique applies on a DMRS symbol in the same way as on a PBCH symbol as aforementioned, especially for choosing the DFT size L.

In certain aspects, a network entity (e.g., a base station) comprises means for generating PBCH and for applying a PAPR reduction technique on PBCH before that the generated PBCH is mapped to subcarriers, wherein the PAPR reduction technique is applied in accordance with methods in the present disclosure.

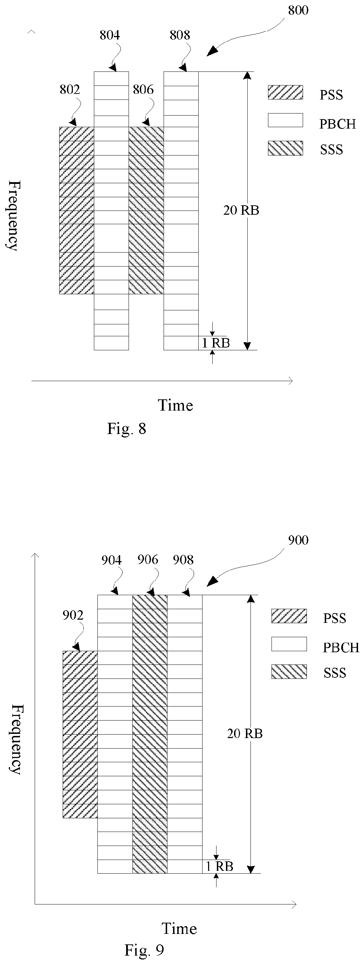

Figure 8 illustrates an example of an SSB configuration in accordance with certain aspects of the present disclosure.

The Time-axis in the illustration indicates time (e.g. symbols), and the Frequency-axis indicates frequency. As seen with reference to Fig. 8, SSB 800 includes a PSS 802, a PBCH 804, an SSS 806, a PBCH 808. In certain aspects, the PBCH 804, 808 are not multiplexed in the frequency domain on a same symbol, with PSS or SSS. In certain aspects, the PBCH 804 and PBCH 808 are allocated to the same frequency range, i.e. the PBCH 804 and PBCH 808 have the same bandwidth, or PBCH 804 and PBCH 808 have the same number of RBs and their respective RBs are overlapped in the frequency domain. In certain aspects, the PSS 802 and SSS 806 are allocated to the same frequency range, i.e. the PSS 802 and SSS 806 have the same bandwidth. In certain aspects, the PSS 802 and SSS 806 are allocated to a portion (e.g. 3/5 or 1/2) of the frequency range of the PBCH 804, 806. As shown in Fig. 8, the PSS 802 and PSS 806 comprise each 12 resource blocks (RB), meanwhile, the PBCH 804 and PBCH 808 comprise each 20 resource blocks (RB).

As shown in Fig. 8, only SSS is transmitted with the SSS symbol 806, and no PBCH is multiplexed. Thus, all the subcarriers of the SSS symbol 806 are allocated to SSS. Advantageously, the PAPR of the SSS symbol may be reduced, by applying the PAPR reduction method on SSS symbol.

An ordering of the SSB 800 as shown in Fig. 8 comprises the PSS 802, followed by the PBCH 804, followed by the SSS 806, followed by the PBCH 808. Through the said particular order in SSB 800, it should be noted that the order of the PSS 802, PBCH 804, SSS 806, and PBCH 808 may be different.

In certain aspects (not presented), the SSB 800 may comprise additional or fewer reference signals or additional or fewer PBCH symbols.

In certain aspects (not presented), the SSB 800 may include signals other than shown, for example, an SSB may comprise further a tertiary synchronization signal.

Though the symbols 802, 804, 806, 808 are shown with particular durations and frequency allocations, it is to note that the durations and frequency allocation of the PSS 802, PBCH 804, SSS 806 and PBCH 808 may be different.

Figure 9 illustrates an example of an SSB configuration in accordance with certain aspects of the present disclosure.

As seen with reference to Fig. 9, SSB 900 includes a PSS symbol 902, a PBCH symbol 904, an SSS symbol 906, a PBCH symbol 908. In certain aspects, the PBCH 904, 908 are not multiplexed in the frequency domain on a same symbol, with PSS or SSS. In certain aspects, the SSS 906 are allocated to the same frequency range as PBCH 904 and PBCH 908.

As shown in Fig. 9, the SSS symbol 906 can be of same bandwidth as the PBCH symbol 904, 908. Advantageously, the SSS symbol can be used for the channel estimation for decoding PBCH. Optionally, the SSB may not necessarily contain a DMRS.

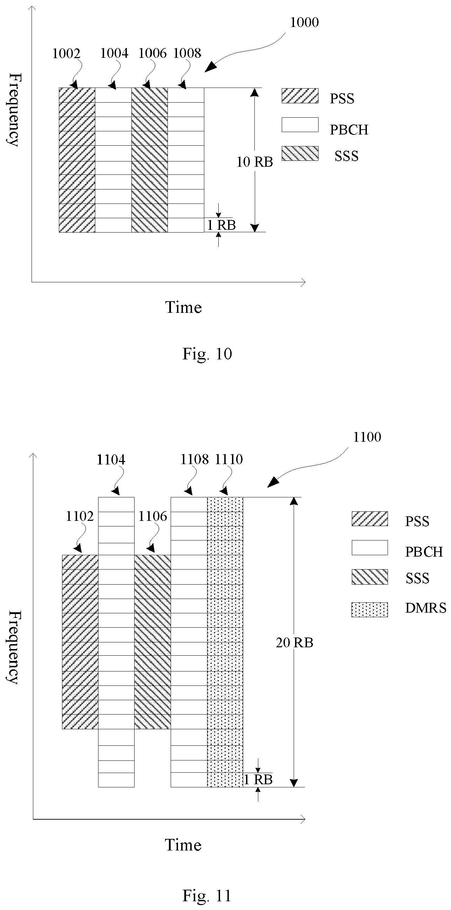

Figure 10 illustrates an example of an SSB configuration in accordance with certain aspects of the present disclosure.

As seen with reference to Fig. 10, SSB 1000 includes a PSS symbol 1002, a PBCH symbol 1004, an SSS symbol 1006, a PBCH symbol 1008. In certain aspects, the PBCH 1004, 1008 are not multiplexed in the frequency domain on a same symbol, with PSS or SSS. In certain aspects, the PBCH 1004 and PBCH 1008 are allocated to the same frequency range. Optionally, PBCH 1004, PBCH 1008 and PSS 1002 are allocated to the same frequency range. Optionally, PSS 1002, PBCH 1004, SSS 1006, and PBCH 1008 are allocated to the same frequency range.

As shown in Fig. 10, the bandwidth of any symbol 1002, 1004, 1006, 1008 of the SSB 1000 is optionally 10 resource blocks.

Figure 11 illustrates an example of an SSB configuration in accordance with certain aspects of the present disclosure.

As seen with reference to Fig. 11, SSB 1100 includes a PSS symbol 1102, a PBCH symbol 1104, an SSS symbol 1106, a PBCH symbol 1108, and a DMRS on a dedicated symbol 1110. In certain aspects, the PBCH 1004, 1008 are not multiplexed on a same symbol, with PSS, SSS or DMRS. In certain aspects, the DMRS 1110 is allocated to the same frequency range as PBCH 1004 and/or PBCH 1008.

Though the SSB 1100 is shown with two symbols 1104, 1108 for PBCH, it is to note that different number of symbols may be used for PBCH. The selection of the number of symbols is depending on the PBCH payload.

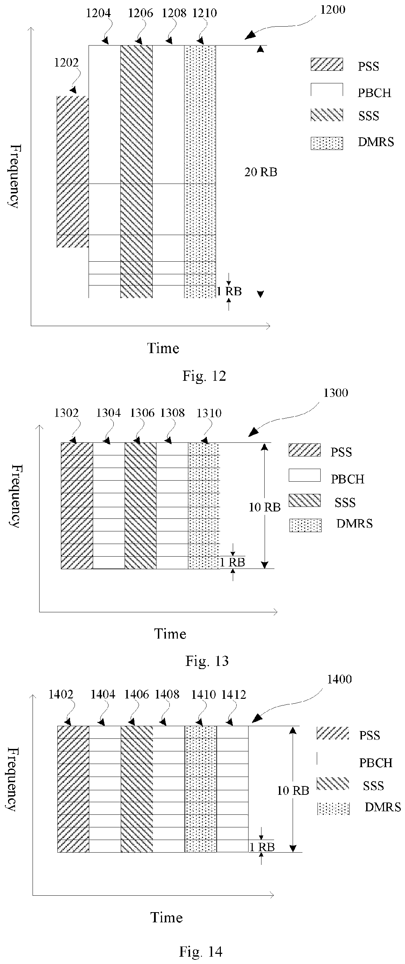

Figure 12 illustrates an example of an SSB configuration in accordance with certain aspects of the present disclosure.

As seen with reference to Fig. 12, SSB 1200 includes a PSS symbol 1202, a PBCH symbol 1204, an SSS symbol 1206, a PBCH symbol 1208, and a DMRS on a dedicated symbol 1210. In certain aspects, the PBCH 1204, 1208 are not multiplexed in the frequency domain on a same symbol, with PSS, SSS or DMRS. In certain aspects, the DMRS 1210 is not multiplexed in the frequency domain on a same symbol, with PBCH.

In certain aspects, the SSS 1206, PBCH 1204, PBCH 1208 and DMRS 1210 are allocated to the same frequency range. Optionally, the bandwidth of the SSS 1206, PBCH 1204, PBCH 1208 and DMRS 1210 is 20 RB.

Figure 13 illustrates an example of an SSB configuration in accordance with certain aspects of the present disclosure.

As seen with reference to Fig. 13, SSB 1300 includes a PSS symbol 1302, a PBCH symbol 1304, an SSS symbol 1306, a PBCH symbol 1308, and a DMRS on a dedicated symbol 1310. In certain aspects, the PBCH 1304, 1308 are not multiplexed in the frequency domain on a same symbol, with PSS, SSS or DMRS. In certain aspects, the DMRS 1310 is not multiplexed in the frequency domain on a same symbol, with PBCH.

In certain aspects, the PSS 1302, PBCH 1304, SSS 1306, PBCH 1308 and DMRS 1310 are allocated to the same frequency range. Optionally, the bandwidth of PSS 1302, PBCH 1304, SSS 1306, PBCH 1308 and DMRS 1310 is 10 RB.

Advantageously, the structure of the SSB shown in Figure 13 is a very balanced structure, i.e., PSS 1302, PBCH 1304, SSS 1306, PBCH 1308 and DMRS 1310 all have the same bandwidth and the each PBCH 1304, 1308 is in the middle of PSS 1302 and SSS 1306 or in the middle of SSS 1306 and DMRS 1310.

Figure 14 illustrates an example of an SSB configuration in accordance with certain aspects of the present disclosure.

As seen with reference to Fig. 14, SSB 1400 includes a PSS symbol 1402, a PBCH symbol 1404, an SSS symbol 1406, a PBCH symbol 1408, and a DMRS on a dedicated symbol 1410, and a PBCH symbol 1412. In certain aspects, the PBCH 1404, 1408, 1412 are not multiplexed in the frequency domain on a same symbol, with PSS, SSS or DMRS. In certain aspects, the DMRS 1410 is not multiplexed in the frequency domain on a same symbol, with PBCH.

Optionally, to further increase the PBCH payload capacity with regard to the SSB shown in Fig. 13, the SSB 1400 includes 6 symbols with an ordering pattern: PSS-PBCH-SSS-PBCH-DMRS-PBCH. Optionally, DMRS and PBCH are of the same bandwidth. Optionally, PBCH and SSS are of the same bandwidth.

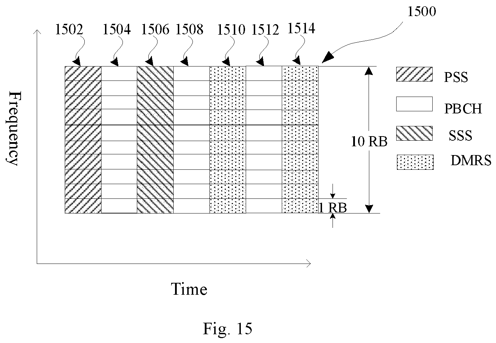

Figure 15 illustrates an example of an SSB configuration in accordance with certain aspects of the present disclosure.

As seen with reference to Fig. 15, SSB 1500 includes a PSS symbol 1502, a PBCH symbol 1504, an SSS symbol 1506, a PBCH symbol 1508, a DMRS on a dedicated symbol 1510, a PBCH symbol 1512, and a DMRS on a dedicated symbol 1514. In certain aspects, the PBCH 1504, 1508, 1512 are not multiplexed in the frequency domain on a same symbol, with PSS, SSS or DMRS. In certain aspects, the DMRS 1510, 1514 are not multiplexed in the frequency domain on a same symbol, with PBCH. Though the SSB comprises two DMRS symbols 1510, 1514 as shown in Fig. 15, it is to note that an SSB may comprise more than two DMRS symbols, wherein DMRS symbols are not multiplexed with the PBCH and/or the SSS, and/or PSS.

Optionally, to further increase the PBCH payload capacity with regard to the SSB shown in Fig. 13, an SSB includes 7 symbols with an ordering pattern: PSS-PBCH-SSS-PBCH-DMRS-PBCH-DMRS. Optionally, DMRS and PBCH are of the same bandwidth. Optionally, PBCH and SSS are of the same bandwidth.

In certain aspects (not represented), an SSB comprises PBCH which is multiplexed with reference signal and/or synchronization signal on a same symbol, for example, certain portions (e.g., frequency ranges, resource blocks (RB), resources elements (RE)) are allocated to the transmission of reference sequences, such as in demodulation reference signals (DMRS). Through certain aspects are described as regards DMRS in an SSB, it is to note that other reference signals may be selected and comprised in the SSB instead in a similar way. Further, a PAPR reduction operation may be applied only to the PBCH, but not to DMRS, before PBCH are mapped to resources allocated, i.e. the DMRS is mapped directly to resources without being mapped. Further, the PAPR reduction operation may comprise a Discrete Fourier Transform (DFT) operation.

In certain aspects, an SSB comprises one or more physical broadcast channel (PBCH) symbols and at least two different of the following: primary synchronization signal (PSS) symbol, secondary synchronization signal (SSS) symbol, demodulation reference signal (DMRS) symbol.

In certain aspects, in an ordering of the SSB, a PBCH symbol of the one or more PBCH symbols is between the PSS symbol and the SSS symbol or the SSS symbol and the DMRS symbol. Optionally, an SSB contains at least two PBCH symbols. The PBCH symbols are not consecutive in the time domain, wherein two PBCH symbols are separated in the time domain by the PSS symbol and/or the SSS symbol and/or the DMRS symbol.

In certain aspects, the bandwidth of the SSS symbol consists of SSS resource blocks (RB), wherein the resources elements (RE) of the SSS RB are allocated to SSS.

In certain aspects, the bandwidth of the DMRS symbol consists of DMRS resource blocks (RB), wherein the resources elements (RE) of the DMRS RB are allocated to DMRS.

In certain aspects, the PBCH symbol has the same bandwidth as at least one of the following: the PSS symbol, the SSS symbol, the DMRS symbol.

In certain aspects, the PBCH is processed with a peak to average power ratio (PAPR) reduction operation before being mapped to the subcarriers.

In certain aspects, the PAPR reduction operation comprises at least Discrete Fourier Transform (DFT) spreading operation.

In certain aspects, the bandwidth of the PBCH symbol consists of PBCH resource blocks (RB), wherein the resources elements (RE) of the PBCH RB are allocated to PBCH.

Commercial interests for some embodiments are as follows: 1. providing a method of SSB design that decouples the DMRS and PBCH; 2. providing a method of PAPR reduction technique; 3. providing a method for applying PAPR reduction technique on a symbol of an SSB; 4. Some embodiments of the present disclosure are used by 5G-NR chipset vendors, V2X communication system development vendors, automakers including cars, trains, trucks, buses, bicycles, moto-bikes, helmets, and etc., drones (unmanned aerial vehicles), smartphone makers, communication devices for public safety use, AR/VR device maker for example gaming, conference/seminar, education purposes. Some embodiments of the present disclosure are a combination of "techniques/processes" that can be adopted in 3GPP specification to create a base station or a user equipment. Some embodiments of the present disclosure could be adopted in the 5G NR unlicensed band communications. Some embodiments of the present disclosure propose technical mechanisms.

Although the present disclosure has been described with reference to one or more examples illustrative and not restrictive, those skilled in the art will recognize that changes may be made in form and detail without departing from essential characteristics of the invention.

**Abbreviations**

| Abbreviations | Full name |
| --- | --- |
| NR | New radio |
| BS | Base Station |
| UE | User Equipment |
| OFDM | Orthogonal frequency division multiplexing |
| SSB | Synchronization signal block |
| DFT | Discrete Fourier Transform |
| RB | Resource block |

(continued)

| Abbreviations | Full name |
| --- | --- |
| PBCH | Physical broadcast channel |
| PSS | Primary synchronization signal |
| SSS | Secondary synchronization signal |
| DMRS | Downlink demodulation signal |
| RE | Resource element |
| PAPR | Peak to average power ratio |

**Claims**

1. A method for wireless communication at a base station (BS), comprising:
transmitting a first information, wherein the first information comprises a physical broadcast channel (PBCH) and at least one of the following: a secondary synchronization signal (SSS), a demodulation reference signal (DMRS); and wherein the first information is used for synchronization.

2. The method according to claim 1, wherein the PBCH is located in a first set of symbols, where the first set of symbols comprises at least one symbol.

3. The method according to claim 1 or 2, wherein the first information comprises the DMRS and the DMRS is located in a second set of symbols, where the second set of symbols comprises at least one symbol.

4. The method according to any of claims 1 to 3, wherein the first information comprises the SSS and the SSS is located in a third set of symbols, where the third set of symbols comprises at least one symbol.

5. The method according to any of claims 3 to 4, wherein the first set of symbols is different from the second set of symbols and/or the third set of symbols.

6. The method according to any of claims 4 to 5, wherein the third set of symbols is different from the second set of symbols.

7. The method according to any of claims 4 to 6, wherein the first set of symbols comprises at least two symbols, which are separated in time domain by at least one symbol from the second set of symbols or from the third set of symbols.

8. The method according to any of claims 1 to 7, wherein the PBCH is applied with a PAPR reduction operation, and the PAPR reduction operation comprises a DFT operation.

9. The method according to any of claims 1 to 8, wherein the SSS has the same bandwidth as PBCH and/or DMRS.

10. The method according to any of claims 1 to 9, wherein the first information comprises at least an synchronization signal/physical broadcast channel block (SSB) or SS/PBCH block.

11. A base station (BS) for wireless communication, comprising:
a memory; a transceiver; and a processor coupled to the memory and the transceiver, wherein said memory containing instructions executable by said processor, whereby said base station is operative to perform the method according to any of claims 1 to 10.

12. A method for wireless communication at a user equipment (UE), comprising:
receiving a first information, wherein the first information comprises a physical broadcast channel (PBCH) and at least one of the following: a secondary synchronization signal (SSS), a demodulation reference signal (DMRS); and wherein the first information is used for synchronization.

13. The method according to claim 12, wherein the PBCH is located in a first set of symbols, where the first set of symbols comprises at least one symbol.

14. The method according to claim 12 or 13, wherein the first transmission comprises the DMRS and the DMRS is located in a second set of symbols, where the second set of symbols comprises at least one symbol.

15. The method according to any of claims 12 to 14, wherein the first information comprises the SSS and the SSS is located in a third set of symbols, where the third set of symbols comprises at least one symbol.

16. The method according to any of claims 14 to 15, wherein the first set of symbols is different from the second set of symbols and/or the third set of symbols.

17. The method according to any of claims 15 to 16, wherein the third set of symbols is different from the second set of symbols.

18. The method according to any of claims 15 to 17, wherein the first set of symbols comprises at least two symbols, which are separated in time domain by at least one symbol from the second set of symbols or from the third set of symbols.

19. The method according to any of claims 12 to 18, wherein the PBCH is applied with a PAPR reduction operation, and the PAPR reduction operation comprises a DFT operation.

20. The method according to any of claims 12 to 19, wherein the SSS has the same bandwidth as PBCH and/or DMRS.

21. The method according to any of claims 12 to 20, wherein the first information comprises synchronization signal/physical broadcast channel block (SSB) or SS/PBCH block.

22. A user equipment (UE) for wireless communication, comprising:
a memory; a transceiver; and a processor coupled to the memory and the transceiver, wherein said memory containing instructions executable by said processor, whereby said base station is operative to perform the method according to any of claims 12 to 21.

23. A non-transitory computer-readable storage medium has stored thereon instructions that, when executed by a computer, cause the computer to perform the method according to any of claims 1 to 9 and 12 to 21.

24. A chip, comprising:
a processor, configured to call and run a computer program stored in a memory, to cause a device in which the chip is installed to execute the method of any one of claims 1 to 9 and 12 to 21.

25. A computer readable storage medium, in which a computer program is stored, wherein the computer program causes a computer to execute the method of any one of claims 1 to 9 and 12 to 21.

26. A computer program product, comprising a computer program, wherein the computer program causes a computer to execute the method of any one of claims 1 to 9 and 12 to 21.

Fig. 1

Fig. 2

Fig. 3

Fig. 4-1

Fig. 4-2

Fig. 5

Fig. 6

Fig. 7

800

804  808

802  806

PSS
PBCH
SSS

Frequency

20 RB

1 RB

Time

Fig. 8

900

904  906  908

902

PSS
PBCH
SSS

Frequency

20 RB

1 RB

Time

Fig. 9

Fig. 10

Fig. 11

Fig. 12

Fig. 13

Fig. 14

Fig. 15

Europäisches
Patentamt

European
Patent Office

Office européen
des brevets

## EUROPEAN SEARCH REPORT

Application Number

EP 20 30 5498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/061494 A1 (INTEL CORP [US]) 26 March 2020 (2020-03-26) * paragraphs [0002], [0022], [0025], [0026]; claim 12; figures 2,4,5 * ----- | 1-26 | INV. H04L5/00 |

TECHNICAL FIELDS
SEARCHED      (IPC)

H04L

The present search report has been drawn up for all claims

| Place of search | Date of completion of the search | Examiner |
|---|---|---|
| The Hague | 1 October 2020 | May, David |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 30 5498

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2020

| Patent document cited in search report | Publication date | Patent family member(s) | Publication date |
|---|---|---|---|
| WO 2020061494 A1 | 26-03-2020 | NONE | |

EPO FORM P0459

For more details about this annex : see Official Journal of the European Patent Office, No. 12/82